# FASCICULE DE BREVET EUROPEEN

(11) **EP 0 891 735 B1**
(45) Date de publication et mention de la délivrance du brevet: **29.01.2003**
(21) Numéro de dépôt: 98401742.6
(22) Date de dépôt: 09.07.1998
(51) Int. Cl.: A47J 37/08

(54) **Grille-pain électrique**
Elektrischer Brotröster
Electric toaster

(30) Priorité: 18.07.1997 FR 9709188
(43) Date de publication de la demande: 20.01.1999
(73) Titulaire: MOULINEX ESPANA S.A., 08021 Barcelone (ES)
(72) Inventeur: Arnedo, Julian, 08031 Barcelone (ES); Basora Sanjaun, Antonio, 08028 Barcelone (ES)
(74) Mandataire: Busquets, Jean-Pierre

(56) Documents cités:
- EP-A- 0 375 865
- GB-A- 2 220 311
- US-A- 4 245 148
- US-A- 5 094 154

## Description

La présente invention se rapporte aux grille-pain électriques comprenant, dans un boîtier, une enceinte de grillage équipée de moyens de chauffage à rayonnement infrarouge situés de part et d'autre d'un support d'un corps à griller, un capteur infrarouge dont l'angle de visée est orienté vers l'un desdits moyens de chauffage, et un dispositif de commande de l'alimentation électrique des moyens de chauffage qui est subordonné à un dispositif de mesure du rayonnement reçu par le capteur, qui est destiné à déterminer la température du corps à griller introduit dans l'enceinte, et qui comporte un moyen de traitement du signal émis par le capteur, un moyen comparateur d'un signal (S) sortant du moyen de traitement avec un signal (N) émis par un moyen de réglage du niveau de grillage.

Un tel grille-pain est déjà connu du document EP-A-0 375 865.

Dans les grille-pain de ce type, le dispositif de mesure ainsi que le capteur doivent rester fiables pendant des années quelles que soient les conditions d'utilisation. Dans le cas où le corps à griller, par exemple une tranche de pain, est correctement placé entre le moyen de chauffage et le capteur, le dispositif de mesure assure un cycle de grillage normal et permet d'obtenir le brunissement sélectionné par l'utilisateur. Par contre, en cas de mauvais positionnement du corps à griller, et voire même l'oubli d'insertion de ce corps dans l'enceinte de grillage, le capteur reçoit directement le rayonnement émis par l'un desdits moyens de chauffage et se trouve donc aveuglé. Cet intense rayonnement, non seulement, est néfaste aux composants électroniques du capteur, mais nuit aussi gravement au dispositif de mesure si aucune action d'interruption du rayonnement n'est prise dans un temps assez court.

Pour palier ces défauts, on a proposé soit de placer des volets mobiles devant le capteur, soit d'augmenter la sensibilité du dispositif de mesure de manière à obtenir l'arrêt instantané du dispositif de commande de l'alimentation en cas d'aveuglement du capteur. La première solution est trop coûteuse et difficile à mettre en oeuvre. Quant à la seconde solution, elle induit en erreur l'utilisateur qui croit, quand le corps à griller est mal placé, que le grille-pain ne fonctionne pas du fait que l'arrêt de l'alimentation et la mise en marche du grille-pain sont consécutifs lors de cycles de grillage en continu.

L'invention à pour but de remédier à ces inconvénients tout en procurant une sécurité d'utilisation de ce type de grille-pain.

Selon l'invention, le dispositif de mesure comprend, entre le moyen de traitement et le moyen comparateur, un moyen de dérivation du signal (S) dont la commande est pilotée par un moyen de temporisation à durée courte qui rétablit à la fin de ladite durée le passage du signal (S) vers le moyen comparateur.

Ainsi, en l'absence ou en cas de mauvais positionnement du corps à griller, le dispositif de mesure coupe rapidement le moyen de chauffage mais avec un léger retard dû à l'écoulement de la durée du moyen de temporisation assurant ainsi le protection du capteur et du dispositif de mesure et empêchant, dans la seconde hypothèse, un mauvais grillage du fait que le capteur ne mesure que peu de rayonnement réfléchi mais plutôt le rayonnement direct. En outre, après ce délai, l'attention de l'utilisateur est attirée par l'interruption du moyen de chauffage et peut réagir immédiatement, soit pour mettre une tranche de pain dans la cavité, soit pour positionner correctement cette tranche de pain pour obtenir un fonctionnement normal.

Les caractéristiques et avantages de l'invention ressortiront de la description qui va suivre, prise à titre d'exemple non limitatif, en référence aux dessins annexés dans lesquels :
- la figure 1 représente schématiquement un grille-pain comportant un capteur et un dispositif de mesure selon l'invention ;
- la figure 2 représente un schéma bloc du capteur et du dispositif de mesure selon l'invention ;
- la figure 3 est un schéma électronique d'un mode de réalisation de l'invention.

Comme représenté à la figure 1, le grille-pain comporte un boîtier 1, une enceinte de grillage 2 équipée de moyens de chauffage 3 à rayonnement infrarouge, situés de part et d'autre d'un support 4 d'un corps à griller 5 et constitués respectivement par exemple par un tube à quartz comportant un fil résistif. Ces tubes sont agencés de façon symétrique par rapport au support 4 qui est, dans le cas présent, un chariot porte-aliment monté mobile verticalement de façon connue en soi dans l'enceinte de grillage.

Entre le boîtier 1 et l'enceinte 2 est agencé un capteur infrarouge 6 dont l'angle de visée schématisé par des traits interrompus est orienté vers l'un desdits moyens de chauffage 3, c'est-à-dire vers l'un opposé des tubes quartz. Dans l'exemple de réalisation, le capteur 6 est du type thermopile et est monté sur un support 7, à distance de la paroi de l'enceinte ; sa partie sensible étant située en regard d'un trou 8 pratiqué dans ladite paroi de l'enceinte. Ainsi, le capteur peut recevoir le rayonnement réfléchi du tube quartz émanant du corps à griller.

Le grille-pain comporte de façon connue en soi un dispositif de commande de l'alimentation électrique des moyens de chauffage qui est subordonné à un dispositif de mesure 10 du rayonnement reçu par le capteur 2 et destiné à déterminer la température du corps à griller introduit dans l'enceinte.

Le dispositif de mesure comporte également un moyen 12 de traitement du signal émis par le capteur, et un moyen comparateur 13 d'un signal (S) sortant du moyen 12 de traitement avec un signal (N) émis par un moyen 14 de réglage manuel du niveau de grillage.

Selon l'invention, le dispositif de mesure 10 comprend, entre le moyen de traitement 12 et le moyen comparateur 13, un moyen 16 de dérivation du signal (S) dont la commande est pilotée par un moyen de temporisation 18 à durée fixée courte qui rétablit, à la fin de ladite durée, le passage du signal (S) vers le moyen comparateur 13.

En outre, pour tenir compte de l'état d'utilisation du grille-pain, soit un premier état correspondant à une première utilisation et donc un démarrage à température ambiante, soit un second état correspondant à des cycles successifs de grillage à température intermédiaire d'enceinte située aux environs de 90°C, l'invention prévoit que le moyen de temporisation 18 ait deux valeurs de durée courte, fonctions de l'état d'utilisation du grille-pain. Ainsi, dans le premier état, la valeur de la durée de temporisation est fixée dans une plage de 10 à 12 secondes, tandis que dans le second état, cette valeur est de l'ordre de 3 secondes.

Grâce à l'invention, dans son premier état de démarrage à froid, et dans le cas où, par exemple le tranche de pain n'est pas située en regard du capteur 6, le moyen de temporisation 18 ne rétablira le passage du signal (S) vers le moyen comparateur 13 qu'à la fin de l'écoulement des 10 à 12 secondes, lequel comparateur recevant le signal (S) supérieur au signal (N) du niveau de grillage, permettra au dispositif de commande de l'alimentation d'arrêter immédiatement l'alimentation des moyens de chauffage 3.

L'invention est particulièrement intéressante dans le cas où le grille-pain est en son second état car, au lieu que le comparateur 13 n'intervienne immédiatement sur le dispositif de commande pour arrêter l'alimentation des moyens de chauffage, le moyen de temporisation 18 introduit un retard de 3 secondes, retard qui notifie à l'utilisateur que son grille-pain n'est pas en panne et qui lui permet donc de remédier au défaut de mise en place du corps à griller.

A titre d'exemple et en se référant à la figure 3 dans laquelle on a gardé les mêmes références pour désigner les mêmes moyens de l'invention, le schéma électronique d'application comprend un capteur infrarouge 6 relié à un moyen 12 de traitement du signal comprenant un amplificateur opérationnel 20 dont la sortie est reliée à une résistance 21. La sortie 22 de cette résistance est liée, d'une part, à une branche conduisant à un moyen comparateur 13, et d'autre part, au moyen de dérivation 16 constitué d'une diode 23 et d'un amplificateur opérationnel du type LM 324 dont un étage est monté en comparateur 24 dont les deux sorties a, b sont liées respectivement à une tension de référence (VREF) et à une branche comportant le moyen de temporisation 18 constitué par un condensateur 25 et une résistance de charge 26 connectée à une tension d'alimentation VCC. Le moyen comparateur 13 est constitué par un étage de l'amplificateur opérationnel LM 324 et dont la sortie C est reliée à un dispositif de commande de l'alimentation électrique. Dans cette réalisation, ce dispositif comprend de façon connue en soi un électro-aimant 27 qui est destiné à relâcher le support 4 et à ouvrir des contacts d'alimentation (non représentés) en fin de cycle de grillage, l'alimentation de cet électro-aimant étant pilotée par le comparateur 13.

On expliquera le fonctionnement du circuit décrit ci-dessus pour le cas où le grille-pain est en son second état, c'est-à-dire présentement à une température intermédiaire d'enceinte à 90°C et à une température d'un tube à quartz voisine de 600°C, et que le corps à griller (tranche de pain) est mal positionné ou absent de l'enceinte de grillage. Par conséquent, dès la mise en marche du grille-pain pour un nouveau cycle de grillage, le capteur 6 reçoit le maximum de rayonnement du tube quartz et le signal (S) en sortie de l'amplificateur 20 est dérivé par la diode 23 sur l'étage comparateur 24. Le condensateur 25 se trouve chargé à la tension VCC dans la durée de 3 secondes puisqu'il était déjà à VCC/2 après sa décharge précédente. L'étage comparateur ne provoque plus ainsi de court-circuit et rétablit le passage du signal (S) vers l'entrée positive du moyen comparateur 13. La sortie C de ce comparateur se trouve alors au même potentiel VCC que celui de l'électro-aimant. De ce fait, l'électro-aimant n'est plus alimenté et relâche le support 4 en coupant simultanément l'alimentation électrique des tubes à quartz.

## Revendications

1. Grille-pain électrique comprenant, dans un boîtier (1), une enceinte de grillage (2) équipée de moyens de chauffage (3) à rayonnement infrarouge situés de part et d'autre d'un support (4) d'un corps à griller (5), un capteur infrarouge (6) dont l'angle de visée est orienté vers l'un desdits moyens de chauffage (3), et un dispositif de commande de l'alimentation électrique des moyens de chauffage (3) qui est subordonné à un dispositif de mesure (10) du rayonnement reçu par le capteur (6), est destiné à déterminer la température du corps à griller (5) introduit dans l'enceinte (2), et qui comporte un moyen (12) de traitement d'un premier signal émis par le capteur (6), un moyen comparateur (13) d'un deuxième signal (S) sortant du moyen de traitement (12) avec un troisième signal (N) émis par un moyen de réglage (14) du niveau de grillage,
**caractérisé en ce que** le dispositif de mesure (10) comprend, entre le moyen de traitement (12) et le moyen comparateur (13), un moyen (16) de dérivation du deuxième signal (S) dont la commande est pilotée par un moyen de temporisation (18) à durée courte qui rétablit à la fin de ladite durée le passage du deuxième signal (S) vers le moyen comparateur (13).

2. Grille-pain selon la revendication 1,
**caractérisé en ce que** le capteur (6) est du type à thermopile.

3. Grille-pain selon la revendication 1 ou 2,
**caractérisé en ce que** le moyen de temporisation (18) a deux valeurs de durée courte fonctions de l'état d'utilisation du grille-pain.

4. Grille-pain selon la revendication 3,
**caractérisé en ce que**, dans un premier état d'utilisation, la valeur de la durée de temporisation est fixée dans une plage de 10 à 12 secondes, tandis que, dans un second état correspondant à des cycles successifs de grillage, la valeur de la durée de temporisation est de l'ordre de 3 secondes.

5. Grille-pain selon l'une des quelconques revendications précédentes,
**caractérisé en ce que** le moyen (12) de traitement du signal comprend un premier amplificateur opérationnel (20) dont la sortie est reliée à une résistance (21) liée, d'une part, à une branche conduisant au moyen comparateur (13), et d'autre part, au moyen de dérivation (16) constitué d'une diode (23) et d'un deuxième amplificateur opérationnel dont un étage (24) est monté en comparateur et relié au moyen d'une temporisation (18), ledit moyen comparateur (13) étant également formé par un étage dudit deuxième amplificateur opérationnel et dont la sortie (C) est reliée au dispositif de commande de l'alimentation électrique comprenant un électro-aimant (27) destiné notamment à ouvrir des contacts d'alimentation.

## Claims

1. Electric toaster comprising, in a casing (1), a toasting chamber (2) equipped with infrared heating means (3) situated on each side of a support (4) for a body to be toasted (5), an infrared sensor (6) whose angle of sight is oriented towards one of the said heating means (3), and a device for controlling the electrical power supply to the heating means (3) which is dependent on a device (10) for measuring the radiation received by the sensor (6), which is intended to determine the temperature of the body to be toasted (5) introduced into the chamber (2), and which has a means (12) for processing a first signal emitted by the sensor (6), a means (13) for comparing a second signal (S) leaving the processing means (12) with a third signal (N) emitted by a means (14) for adjusting the toasting level, **characterised in that** the measuring device (10) comprises, between the processing means (12) and the comparator means (13), a means (16) for diverting the second signal (S) whose command is controlled by a short-duration timing means (18) which re-establishes, at the end of the said period, the passage of the second signal (S) to the comparator means (13).

2. Toaster according to claim 1, **characterised in that** the sensor (6) is of the thermopile type.

3. Toaster according to claim 1 or 2, **characterised in that** the timing means (18) has two short-duration values which are a function of the state of use of the toaster.

4. Toaster according to claim 3, **characterised in that**, in a first state of use, the value of the timing period is fixed within a range from 10 to 12 seconds, whilst, in a second state corresponding to successive toasting cycles, the value of the timing period is around 3 seconds.

5. Toaster according to anyone of the preceding claims, **characterised in that** the signal processing means (12) comprises a first operational amplifier (20) whose output is connected to a resistor (21) connected on the one hand to a branch leading to the comparator means (13) and on the other hand to the diverting means (16) consisting of a diode (23) and a second operational amplifier, one stage (24) of which is connected as a comparator and connected to the timing means (18), the said comparator means (13) also being formed by a stage of the said second operational amplifier and whose output (c) is connected to the device controlling the electrical power supply comprising an electromagnet (27) intended in particular to open supply contacts.

## Patentansprüche

1. Elektrischer Brotröster, der in einem Gehäuse (1) einen Röstraum (2) aufweist, der mit Infrarotheizvorrichtungen (3) ausgerüstet ist, die beiderseits eines Halters (4) für einen zu röstenden Körper (5) angeordnet sind, einen Infrarotfühler (6). dessen Blickwinkel auf eine der Heizvorrichtungen (3) hin gerichtet ist, und eine Steuervorrichtung der Stromversorgung der Heizvorrichtung (3) aufweist, die einer Meßvorrichtung (10) der vom Meßfühler (6) empfangenen Strahlung untergeordnet ist, welche dazu dient, die Temperatur des in den Röstraum (2) eingesetzten zu röstenden Körpers (5) zu bestimmen und die eine Vorrichtung (12) zur Verarbeitung eines ersten vom Meßfühler (6) ausgesandten ersten Signals und einen Komparator (13) zum Vergleich eines von der Verarbeitungsvorrichtung (12) ausgehenden zweiten Signals (S) mit einem von einer Vorrichtung zur Regelung des Röstgrads (14) ausgesandten dritten Signal (N) aufweist, **dadurch gekennzeichnet, daß** die Meßvorrichtung (10) zwischen der Verarbeitungsvorrichtung (12) und der Komparatorvorrichtung (13) eine Vorrichtung zur Umleitung des zweiten Signals (S) aufweist, deren Steuerung geführt ist von einer Verzögerungsvorrichtung (18) mit kurzer Dauer, welche am Ende dieser Dauer den Durchgang des zweiten Signals (S) zur Komparatorvorrichtung (13) wieder herstellt.

2. Brotröster nach Anspruch 1, **dadurch gekennzeichnet, daß** der Meßfühler (6) vom Typ Thermoelement ist.

3. Brotröster nach Anspruch 1 oder 2, **dadurch gekennzeichnet, daß** die Verzögerungsvorrichtung (18) zwei Werte der kurzen Dauer hat, die vom Benutzungszustand des Brotrösters abhängen.

4. Brotröster nach Anspruch 3, **dadurch gekennzeichnet, daß** in einem ersten Benutzungszustand der Wert der Dauer der Verzögerung in einem Bereich von 10 bis 12 Sekunden festgelegt ist, während in einem zweitem Zustand, der aufeinanderfolgenden Röstzyklen entspricht, der Wert der Dauer der Verzögerung in der Größenordnung von 3 Sekunden liegt.

5. Brotröster nach einem der vorangehenden Ansprüche, **dadurch gekennzeichnet, daß** die Vorrichtung (12) zur Signalverarbeitung einen ersten Operationsverstärker (20) aufweist, dessen Ausgang mit einem Widerstand (21) verbunden ist, der einerseits mit einer zur Komparatorvorrichtung (13) führenden Leitung und andererseits mit der Umleitungsvorrichtung (16) verbunden ist, die aus einer Diode (23) und einem zweitem Operationsverstärker besteht, von dem eine Stufe (24) als Komparator mit der Verzögerungsvorrichtung (18) verbunden ist, wobei die Komparatorvorrichtung (13) auch von einer Stufe des zweiten Operationsverstärkers gebildet ist und dessen Ausgang (C) mit der Steuervorrichtung der Stromversorgung verbunden ist, welche einen Elektromagneten (27) umfaßt, der besonders zum Öffnen der Stromversorgungskontakte bestimmt ist.
